# EUROPÄISCHE PATENTSCHRIFT

(11) **EP 3 055 551 B1**
(45) Veröffentlichungstag und Bekanntmachung des Hinweises auf die Patenterteilung: **20.09.2017**
(21) Anmeldenummer: 14777289.1
(22) Anmeldetag: 25.09.2014
(51) Int. Cl.: F02M 51/00, F02M 51/06, F16K 31/00

(54) **STEUERVENTIL**
CONTROL VALVE
SOUPAPE DE COMMANDE

(30) Priorität: 11.10.2013 DE 102013220584
(43) Veröffentlichungstag der Anmeldung: 17.08.2016
(73) Patentinhaber: Robert Bosch GmbH, 70442 Stuttgart (DE)
(72) Erfinder: FORKE, Martin, 70499 Stuttgart (DE)
(86) Internationale Anmeldenummer: PCT/EP2014/070447
(87) Internationale Veröffentlichungsnummer: WO 2015/052005

(56) Entgegenhaltungen:
- EP-A1- 1 803 420
- EP-A2- 1 878 873
- WO-A2-2009/149462
- DE-B4-112005 000 562
- US-A1- 2011 240 286
- ANDREW T CONN ET AL: "Smart Radially Folding Structures", IEEE / ASME TRANSACTIONS ON MECHATRONICS, IEEE SERVICE CENTER, PISCATAWAY, NJ, US, Bd. 17, Nr. 5, 1. Oktober 2012 (2012-10-01), Seiten 968-975, XP011457830, ISSN: 1083-4435, DOI: 10.1109/TMECH.2011.2153867
- WEI YANG ET AL: "Review on auxetic materials", JOURNAL OF MATERIALS SCIENCE, Bd. 39, Nr. 10, 1. Mai 2004 (2004-05-01), Seiten 3269-3279, XP055001338, ISSN: 0022-2461, DOI: 10.1023/B:JMSC.0000026928.93231.e0
- POOLE A D ET AL: "Design methodology and case studies in actuator selection", MECHANISM AND MACHINE THEORY, PERGAMON, AMSTERDAM, NL, Bd. 46, Nr. 5, 22. Dezember 2010 (2010-12-22), Seiten 647-661, XP028147971, ISSN: 0094-114X, DOI: 10.1016/J.MECHMACHTHEORY.2010.12.009 [gefunden am 2011-01-03]
- E. M. SEVICK ET AL: "Polymer Brushes as Pressure-Sensitive Automated Microvalves", MACROMOLECULES, Bd. 27, Nr. 19, 1. September 1994 (1994-09-01), Seiten 5285-5290, XP055152486, ISSN: 0024-9297, DOI: 10.1021/ma00097a007

## Beschreibung

Die Erfindung betrifft ein Steuerventil zum Öffnen und Schließen eines Fluidkanals, wie es vorzugsweise für Kraftstoffeinspritzventile und andere kraftstoffführende Komponenten verwendbar ist.

### Stand der Technik

Ventile zum Öffnen und Schließen eines Fluidkanals sind aus dem Stand der Technik aus den verschiedensten Bereichen bekannt. Bei den elektrisch gesteuerten Ventilen ist ein Aktor vorhanden, beispielsweise ein Magnet- oder Piezoaktor, der einen Schließkörper bewegt und dadurch den Durchfluss eines Fluids durch einen oder mehrere Fluidkanäle öffnet und schließt. So ist aus der DE 10 2008 001 330 A1 ein Kraftstoffeinspritzventil mit einem Steuerventil bekannt, bei dem das Steuerventil mit Hilfe eines Piezoaktors bewegt werden kann, der durch seine Bewegung einen Fluidkanal öffnet und schließt, durch den Kraftstoff geleitet wird. Ähnliche Steuerventile sind beispielsweise aus der DE 198 27 267 A1 bekannt, bei denen das Steuerventil mit Hilfe eines Elektromagneten geöffnet oder geschlossen wird. US 2011 240 286 offenbart einen auxetischen Steuerkörper, der in Ventilen eingesetzt werden kann. Bei den bekannten Steuerventilen wird durch den elektrischen Aktor ein Steuerventilglied bewegt, das mit einem Ventilsitz zusammenwirkt und dadurch den Fluidkanal öffnet und schließt. Die Bewegung des Ventilglieds ist stets mit einem gewissen Verschleiß und mit einer Geräuschentwicklung verbunden und benötigt relativ viele Bauteile, um die gewünschte Funktion sicherzustellen.

### Vorteile der Erfindung

Das erfindungsgemäße Steuerventil zum Öffnen und Schließen eines Fluidkanals weist demgegenüber den Vorteil auf, dass der Fluidkanal durch das Verformen eines Steuerkörpers geöffnet oder geschlossen wird. Hierzu weist das Steuerventil einen Steuerkörper auf, der von einem Aktor mit einer Kraft in einer Richtung beaufschlagt werden kann. Der Steuerkörper bewegt dadurch zumindest mittelbar eine Dichtfläche, die die Öffnung eines Fluidkanals öffnet und schließt, und ist aus einem auxetischen Material gefertigt, das sich bei Kraftbeaufschlagung durch den Aktor so verformt, dass die Dichtfläche den Fluidkanal freigibt, sodass ein Fluidstrom freigegeben wird.

Körper aus auxetischem Material sind im Stand der Technik seit längerer Zeit bekannt. So ist in der Offenlegungsschrift DE 10 2008 043 623 A1 ein auxetisches Material beschrieben, das eine negative Poisson-Zahl aufweist, d. h., dass sich das Material bei Beaufschlagung mit einer Kraft in Längsrichtung quer dazu zusammenzieht und nicht, wie bei den allermeisten anderen Materialien, ausdehnt. Durch die negative Poisson-Zahl kann bei Druck auf einen auxetischen Körper somit quer zur Kraftrichtung eine Fläche bewegt werden, die dazu benutzt wird, einen Fluidkanal zu öffnen bzw. zu schließen. Auf diese Weise lässt sich ein kompaktes und schnell reagierendes Steuerventil fertigen, das sich zur Anwendung - beispielsweise in Kraftstoffinjektoren - eignet.

In einer ersten vorteilhaften Ausgestaltung der Erfindung ist das Steuerventil mit einem Steuerkörper versehen, der bezüglich der Richtung der durch den Aktor eingebrachten Kraft eine negative Querkontraktions- oder Poisson-Zahl aufweist. Vorteilhaft ist dabei die Dichtfläche direkt am Steuerkörper ausgebildet, sodass sie sich durch die Kraft auf den Steuerkörper bewegt und dadurch den Fluidkanal öffnet bzw. schließt. Dabei ist der Steuerkörper vorteilhaft zumindest im Wesentlichen zylindrisch ausgebildet, wobei die Kraft auf eine der kreisrunden Stirnseiten aufgebracht wird. Durch die allseitige Symmetrie des Steuerkörpers lässt sich so auch eine größere Anzahl an Fluidkanälen gleichzeitig öffnen und schließen.

In einer weiteren vorteilhaften Ausgestaltung ist der Steuerkörper aus einem metallischen Werkstoff gefertigt. Dies kann beispielsweise dadurch geschehen, dass aus einem geeigneten Metall ein metallischer Schaum gefertigt wird, dessen Poren so gefertigt sind, dass die gewünschten auxetischen Eigenschaften, also eine negative Querkontraktionszahl, erreicht werden.

In einer weiteren vorteilhaften Ausgestaltung ist der Aktor als Piezoaktor ausgebildet, der die Kraft auf den Steuerkörper ausübt. Ein Piezoaktor ist in der Lage, sehr schnell eine erhebliche Kraft aufzubringen, sodass sich der Steuerkörper mit einer hohen Kraft beaufschlagen lässt, um einen ausreichenden Hub der Dichtfläche zu erreichen.

In vorteilhafter und erfindungsgemäßer Weise weist ein Kraftstoffinjektor mit einer längsbeweglichen Ventilnadel zum Öffnen und Schließen einer Einspritzöffnung, durch die Kraftstoff ausgespritzt werden kann, eine Düsennadel auf, die durch ihre Längsbewegung eine Einspritzöffnung öffnet und schließt. Die Düsennadel begrenzt mit ihrer der Einspritzöffnung abgewandten Stirnseite einen Steuerraum, über dessen hydraulischen Druck eine Kraft auf die Düsennadel in Richtung der Einspritzöffnungen aufgebracht werden kann. Weiterhin ist ein Steuerventil vorhanden, das einen Kraftstoffkanal vom Steuerraum in einen Leckölraum steuert. Das Steuerventil ist in der beschriebenen Weise mit einem Steuerkörper versehen, der aus einem auxetischen Material gefertigt ist.

### Zeichnung

In der Zeichnung ist ein erfindungsgemäßes Steuerventil und ein erfindungsgemäßer Kraftstoffinjektor schematisch dargestellt. Es zeigt
- Figur 1a: einen erfindungsgemäßen Kraftstoffinjektor mit einem erfindungsgemäßen Steuerventil schematisch im Längsschnitt, wobei das Steuerventil hier nicht betätigt ist,
- Figur 1b: denselben Kraftstoffinjektor mit aktiviertem Steuerventil,
- Figur 2a: und
- Figur 2b: ein weiteres Ausführungsbeispiel eines erfindungsgemäßen Steuerventils bzw. eines erfindungsgemäßen Kraftstoffinjektors in derselben Darstellung wie Figur 1a und 1b, wobei Figur 2a das nicht betätigte und Figur 2b das betätigte Steuerventil zeigt.

### Beschreibung der Ausführungsbeispiele

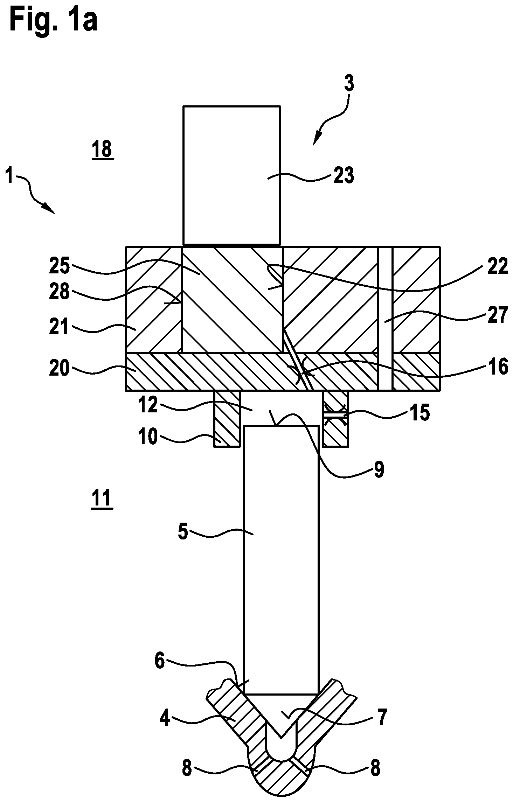

In Figur 1a ist ein erfindungsgemäßer Kraftstoffinjektor mit einem ebenso erfindungsgemäßen Steuerventil schematisch im Längsschnitt dargestellt. Der Kraftstoffinjektor 1 weist eine Düsennadel 5 auf, die längsverschiebbar innerhalb des Kraftstoffinjektors 1 angeordnet ist. Die Düsennadel 5 ist im Wesentlichen kolbenförmig ausgebildet und weist an ihrem unteren, dem Brennraum zugewandten Ende eine Dichtfläche 7 auf, mit der sie mit einem Düsennadelsitz 6 zusammenwirkt und dadurch die Öffnung einer oder mehrerer Einspritzöffnungen 8 öffnet und schließt. Dabei ist die Düsennadel 5 von einem Druckraum 11 umgeben, in dem stets ein hoher Kraftstoffdruck herrscht. Die Düsennadel 5 wird an ihrem dem Düsennadelsitz 6 abgewandten Ende in einer Hülse 10 geführt, wobei durch die Hülse 10, die Stirnfläche 9 der Düsennadel 5 und eine Drosselscheibe 20 ein Steuerraum 12 begrenzt wird. Der Steuerraum 12 ist über eine in der Hülse 10 ausgebildete Zulaufdrossel 15 mit dem Druckraum 11 verbunden, sodass Kraftstoff vom Druckraum 11 in den Steuerraum 12 fließen kann.

Anschließend an die Drosselscheibe 20 ist ein Steuerventil 3 mit einem Steuerventilkörper 21 innerhalb des Kraftstoffinjektors 1 angeordnet, wobei im Steuerventilkörper 21 und in der Drosselscheibe 20 ein Hochdruckkanal 27 ausgebildet ist, über den Kraftstoff unter hohem Druck in den Druckraum 11 geleitet werden kann. Im Steuerventilkörper 21 ist eine Bohrung 22 ausgebildet, die einen Steuerkörper 25 aufnimmt, der in dem hier gezeigten Ausführungsbeispiel im Wesentlichen zylindrisch ausgebildet ist. Der Steuerkörper 25 liegt mit einer Stirnseite an der Drosselscheibe 20 an, während die andere, gegenüberliegende Stirnseite von einem Aktor 23 beaufschlagt wird, der beispielsweise als Piezoaktor ausgebildet ist. Der Steuerkörper 25 bildet zusammen mit dem Aktor 23 das Steuerventil 3, wobei der Steuerkörper 25 innerhalb der Bohrung 22 so bemessen ist, dass bei nicht betätigtem Steuerventil die als Dichtfläche 28 ausgebildete zylindrische Außenfläche des Steuerkörpers 25 an der Wand der Bohrung 22 dichtend anliegt.

Zur Steuerung des Kraftstoffdrucks innerhalb des Steuerraums 12 ist eine Ablaufdrossel 16 als Bohrung innerhalb der Drosselscheibe 20 und dem Steuerventilkörper 21 ausgebildet, die vom Steuerraum 12 ausgeht und an der Wand der Bohrung 22 endet, wobei die Ablaufdrossel 16 dabei vom Steuerkörper 25 verschlossen wird. Dieser Zustand des Kraftstoffinjektors 1 bzw. des Steuerventils 3 ist in Figur 1a dargestellt.

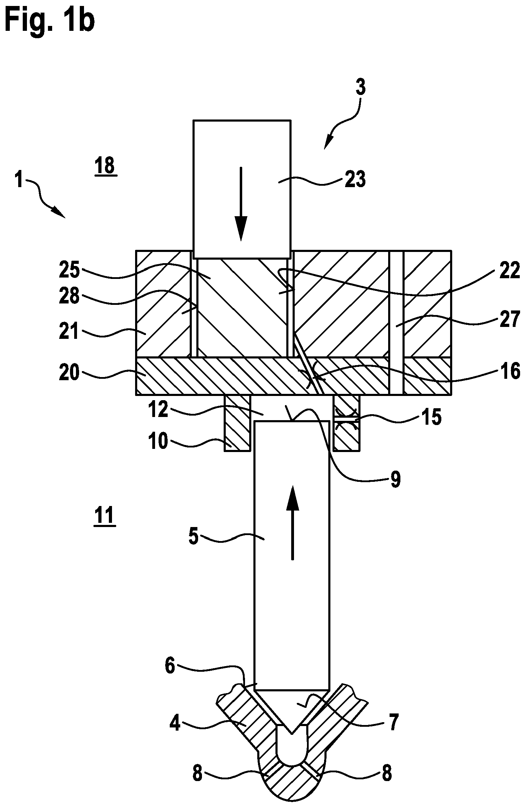

Zur Betätigung des Kraftstoffinjektors bzw. des Steuerventils 3 wird der Aktor 23 betätigt, im Falle eines Piezoaktors also mit einer elektrischen Spannung beaufschlagt. Dadurch übt der Aktor 23 eine Kraft auf den Steuerkörper 25 in Richtung der Ventilnadel 5 aus, wie in Figur 1b dargestellt. Der Steuerkörper 25 besteht aus einem auxetischen Material mit einer negativen Querkontraktions- oder Poisson-Zahl, die sich folgendermaßen auswirkt.

Die Kraft des Aktors 23 drückt auf die obere Stirnseite des Steuerkörpers 25 und drückt diesen dabei um einen bestimmten Betrag zusammen, sodass die beiden Stirnseiten des Steuerkörpers 25 näher zueinander rücken. Aufgrund der negativen Querkontraktionszahl nimmt der Umfang des Steuerkörpers 25 dabei ab, sodass sich die Dichtfläche 28, also die zylindrische Mantelfläche des Steuerkörpers 25, von der Wand der Bohrung 22 entfernt. Dadurch wird die Ablaufdrossel 16 aufgesteuert und Kraftstoff kann aus dem Steuerraum 12 über die Ablaufdrossel 16 und die Bohrung 22 in einen Niederdruckraum abfließen, der in diesem Ausführungsbeispiel den Aktor 23 umgibt. Um das Steuerventil 3 wieder zu verschließen, zieht sich der Aktor 23 wieder zusammen und entlastet dadurch den Steuerkörper 25, der daraufhin wieder seine ursprüngliche Form annimmt und mit seiner Dichtfläche 28 die Ablaufdrossel 16 verschließt. Durch die Entlastung des Steuerraums 12 wird die Düsennadel 5 durch den hydraulischen Druck im Druckraum 11 vom Düsennadelsitz 6 abgehoben, sodass Kraftstoff aus dem Druckraum 11 zu den Einspritzöffnungen 8 fließen kann und durch diese hindurch aus dem Kraftstoffinjektor austreten kann.

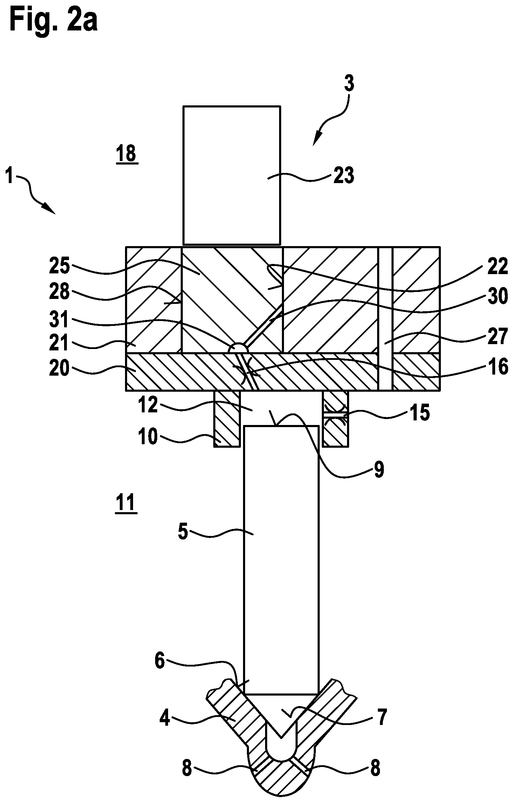

In Figur 2a ist ein weiteres Ausführungsbeispiel des erfindungsgemäßen Steuerventils bzw. des erfindungsgemäßen Kraftstoffinjektors dargestellt. Das Ausführungsbeispiel nach Figur 2a unterscheidet sich von dem in Figur 1a und Figur 1b dargestellten Ausführungsbeispiel nur in der Ausgestaltung der Ablaufdrossel 16 und des Steuerkörpers 25. Da die übrigen Bestandteile des Kraftstoffinjektors identisch sind, wird auf eine nochmalige Beschreibung dieser Bauteile hier verzichtet.

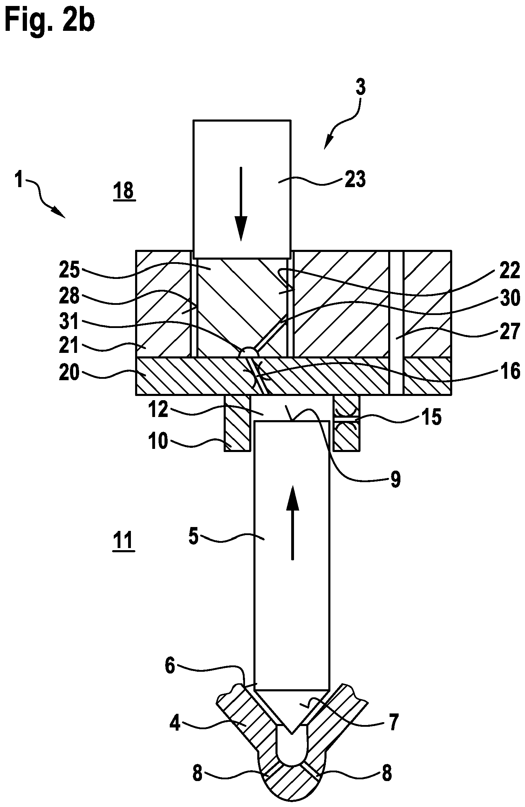

Die Ablaufdrossel 16 ist als Bohrung innerhalb der Drosselscheibe 20 ausgebildet, jedoch mündet diese Ablaufdrossel nicht an der Wand, sondern am Grund der Bohrung 22, also an der Oberseite der Drosselscheibe 20. Im Steuerkörper 25 ist eine kleine Ausnehmung 31 ausgebildet, von der eine Verbindungsbohrung 30, die als Schrägbohrung ausgebildet ist, bis an die Mantelfläche des Steuerventilkörpers 25 geführt ist, die auch hier die Dichtfläche 28 bildet. Bei spannungslosem Steuerkörper 25 wird die Verbindungsbohrung 30 und damit auch die Ablaufdrossel 16 durch die Anlage der Dichtfläche 28 an der Wand der Bohrung 22 abgedichtet. Bei Beaufschlagung des Steuerkörpers 25 mittels des Aktors 23 zieht sich dieser wiederum in radialer Richtung von der Wand der Bohrung 22 weg, sodass die Verbindungsbohrung 32 aufgesteuert wird und Kraftstoff aus dem Steuerraum 12 über die Ablaufdrossel 16, die Ausnehmung 31 und die Verbindungsbohrung 30 in die Bohrung 22 und von dort in den Niederdruckraum 18 abfließen kann. Daraufhin öffnet, wie in Figur 2b dargestellt, der Kraftstoffinjektor in der oben geschilderten Art und Weise.

Neben der Ausbildung des Steuerkörpers 25 in zylindrischer Form sind auch andere Formen des Steuerkörpers 25 denkbar, beispielsweise ein quadratischer Querschnitt, sodass der Steuerkörper 25 insgesamt quader- oder würfelförmig ausgebildet ist.

Als Material des Steuerkörpers 25 kommen beispielsweise Metallschäume in Betracht, deren Porenform die gewünschten auxetischen Eigenschaften ermöglichen, also eine negative Querkontraktionszahl. Neben metallischen Schäumen sind auch Steuerkörper aus anderen Materialien denkbar, beispielsweise aus Kunststoffen, deren Polymere so angeordnet sind, dass sich die gewünschte auxetische Eigenschaft ergibt. Die Wahl des Materials hängt dabei von den auftretenden Kräften und Temperaturen und von der benötigten Verformung des Steuerkörpers 25 ab.

## Patentansprüche

1. Steuerventil (3) zum Öffnen und Schließen eines Fluidkanals (16; 30) mit einem Steuerkörper (25), der durch einen Aktor (23) mit einer Kraft beaufschlagt werden kann und der sich durch die Kraft so verformt, dass eine Dichtfläche (28) zumindest mittelbar durch den Steuerkörper (25) bewegt wird und dabei die Öffnung des Fluidkanals (16; 30) öffnet und schließt, **dadurch gekennzeichnet, dass** der Steuerkörper (25) aus einem auxetischen Material gefertigt ist.

2. Steuerventil nach Anspruch 1, **dadurch gekennzeichnet, dass** der Steuerkörper (25) bezüglich der Richtung der durch den Aktor (23) eingebrachten Kraft eine negative Querkontraktionszahl aufweist.

3. Steuerventil nach Anspruch 1 oder 2, **dadurch gekennzeichnet, dass** die Dichtfläche (28) am Steuerkörper (25) ausgebildet ist.

4. Steuerventil nach Anspruch 1, 2 oder 3, **dadurch gekennzeichnet, dass** der Steuerkörper (25) zumindest im Wesentlichen zylindrisch ausgebildet ist und die Kraft auf eine der kreisrunden Stirnseiten aufgebracht wird.

5. Steuerventil nach Anspruch 4, **dadurch gekennzeichnet, dass** die Dichtfläche (28) durch die zylindrische Mantelfläche des Steuerkörpers (25) gebildet wird.

6. Steuerventil nach einem der Ansprüche 1 bis 5, **dadurch gekennzeichnet, dass** der Steuerkörper (25) aus einem metallischen Werkstoff gefertigt ist.

7. Steuerventil nach einem der Ansprüche 1 bis 6, **dadurch gekennzeichnet, dass** der Aktor (23) ein Piezoaktor ist.

8. Kraftstoffinjektor (1) mit einer längsbeweglichen Ventilnadel (5) zum Öffnen und Schließen wenigstens einer Einspritzöffnung (8), durch die Kraftstoff ausgespritzt werden kann, wobei die Ventilnadel (5) mit ihrer der Einspritzöffnung abgewandten Stirnseite (9) einen Steuerraum (12) begrenzt, über dessen hydraulischem Druck eine Kraft auf die Ventilnadel (5) in Richtung der Einspritzöffnungen (8) aufgebracht werden kann, und mit einem Steuerventil (3), das einen Kraftstoffkanal (16; 30) vom Steuerraum (12) in einen Niederdruckraum (18) steuert, **dadurch gekennzeichnet, dass** das Steuerventil (3) gemäß einem der Ansprüche 1 bis 6 ausgebildet ist.

## Claims

1. Control valve (3) for opening and closing a fluid duct (16; 30), having a control body (25) which can be subjected to a force by an actuator (23) and which deforms under the action of the force such that a sealing surface (28) is moved at least indirectly by the control body (25) and, in the process, opens and closes the opening of the fluid duct (16; 30), **characterized in that** the control body (25) is manufactured from an auxetic material.

2. Control valve according to Claim 1, **characterized in that** the control body (25) has a negative Poisson's ratio with respect to the direction of the force introduced by the actuator (23).

3. Control valve according to Claim 1 or 2, **characterized in that** the sealing surface (28) is formed on the control body (25).

4. Control valve according to Claim 1, 2 or 3, **characterized in that** the control body (25) is of at least substantially cylindrical form and the force is exerted on one of the circular face sides.

5. Control valve according to Claim 4, **characterized in that** the sealing surface (28) is formed by the cylindrical shell surface of the control body (25).

6. Control valve according to one of Claims 1 to 5, **characterized in that** the control body (25) is manufactured from a metallic material.

7. Control valve according to one of Claims 1 to 6, **characterized in that** the actuator (23) is a piezo actuator.

8. Fuel injector (1) having a longitudinally movable valve needle (5) for opening and closing at least one injection opening (8) through which fuel can be discharged, wherein the valve needle (5), by means of its face side (9) averted from the injection opening, delimits a control chamber (12), by means of the hydraulic pressure of which a force can be exerted on the valve needle (5) in the direction of the injection openings (8), and having a control valve (3) which controls a fuel duct (16; 30) from the control chamber (12) into a low-pressure chamber (18), **characterized in that** the control valve (3) is designed according to one of Claims 1 to 6.

## Revendications

1. Soupape de commande (3) qui ouvre et ferme un canal (16; 30) pour fluide, présentant un corps de commande (25) sur lequel une force peut être appliquée par un actionneur (23) et se déformant sous l'action de la force de telle sorte qu'une surface d'étanchéité (28) soit déplacée au moins indirectement dans le corps de commande (25) pour ainsi ouvrir ou fermer l'ouverture du canal (16; 30) pour fluide, **caractérisée en ce que** le corps de commande (25) est réalisé en un matériau auxétique.

2. Soupape de commande selon la revendication 1, **caractérisée en ce que** le corps de commande (25) présente un coefficient négatif de contraction transversale par rapport à la direction de la force appliquée par l'actionneur (23).

3. Soupape de commande selon les revendications 1 ou 2, **caractérisée en ce que** la surface d'étanchéité (28) est formée sur le corps de commande (25).

4. Soupape de commande selon les revendications 1, 2 ou 3, **caractérisée en ce que** le corps de commande (25) a une configuration au moins essentiellement cylindrique et **en ce que** la force est appliquée sur l'un de ses côtés frontaux circulaires.

5. Soupape de commande selon la revendication 4, **caractérisée en ce que** la surface d'étanchéité (28) est formée par la surface cylindrique d'enveloppe du corps de commande (25).

6. Soupape de commande selon l'une des revendications 1 à 5, **caractérisée en ce que** le corps de commande (25) est réalisé en un matériau métallique.

7. Soupape de commande selon l'une des revendications 1 à 6, **caractérisée en ce que** l'actionneur (23) est un piézo-actionneur.

8. Injecteur (1) de carburant présentant une aiguille (5) de soupape mobile longitudinalement, qui ouvre et ferme au moins une ouverture d'injection (8) par laquelle le carburant peut être expulsé, l'aiguille de soupape (5) délimitant par son côté frontal (9) non tourné vers l'ouverture d'injection un espace de commande (12) dont la pression hydraulique permet d'appliquer sur l'aiguille de soupape (5) une force orientée en direction des ouvertures d'injection (8), et présentant une soupape de commande (3) qui commande un canal (16; 30) à carburant depuis l'espace de commande (12) jusque dans un espace (18) à basse pression, **caractérisé en ce que** la soupape de commande (3) est configurée selon l'une des revendications 1 à 6.
